# EUROPEAN PATENT SPECIFICATION

(11) **EP 4 240 568 B1**
(45) Date of publication and mention of the grant of the patent: **17.06.2026**
(21) Application number: 21810319.0
(22) Date of filing: 09.11.2021
(51) Int. Cl.: B27N 1/00, B27N 3/00, B27N 3/04, B27N 3/18, D21B 1/36, D21C 5/02, D21H 11/14

(54) **APPARATUS FOR RECYCLING OF LIGNOCELLULOSIC FIBRES FROM FIBREBOARDS**
VORRICHTUNG ZUR WIEDERVERWERTUNG VON LIGNOCELLULOSEFASERN AUS FASERPLATTEN
APPAREIL POUR LE RECYCLAGE DE FIBRES LIGNOCELLULOSIQUES À PARTIR DE PANNEAUX DE FIBRES

(30) Priority: 09.11.2020 SE 2051303
(43) Date of publication of application: 13.09.2023
(73) Proprietor: Inter IKEA Systems B.V., 2616 LN Delft (NL)
(72) Inventor: FECHTER, Jan-Olof, 342 90 ALVESTA (SE); GERMANN, Michael, 30880 Laatzen (DE); HÅKANSSON, Pontus, 343 32 Älmhult (SE)
(74) Representative: Ström & Gulliksson AB
(86) International application number: PCT/EP2021/081098
(87) International publication number: WO 2022/096743

(56) References cited:
- WO-A1-2020/188606
- US-A- 5 190 226
- US-B1- 6 648 251

## Description

### Field of the invention

The present invention relates to an apparatus for recycling of lignocellulosic fibres from a fibreboard, e.g. LDF, HDF or MDF, comprising compressed lignocellulosic fibres and a binding agent.

### Background

Fibreboard is an engineered wood product that is made out of lignocellulosic fibres, most typically wood fibres. The lignocellulosic fibres in fibreboards are oblong (the ratio length:width typically exceeds 10) fibres, which are fairly short, e.g. less than 5 mm. In order to provide fibreboard, wood fibres are pressed, typically with a binder (e.g. a urea-formaldehyde resin). Fibreboard is a fairly dense product typically having a density of at least 0.5 kg/dm³.

Another engineered wood product is particleboard. Particleboard is less dense and comprise larger, more irregular wood particles. Particleboard is a cheap product, typically used when cost is a more decisive factor than strength. Particleboard may be mechanically re-recycled as the board is not too dense to allow for simple mechanical disintegration. Further, the wood particles in particleboard are large and thus tolerant to mechanical disintegration. Even if their sizes are reduced, the wood particles still be sufficiently large to provide the desired mechanical properties to particleboard comprising re-cycled wood particles.

US 6,648,251 relates to a device for disaggregating pieces of derived timber products from cellulose and/or lignocellulose-containing products, especially particle boards, with a transport device and at least one disaggregation container. The disaggregating process comprises soaking the material with preheated water. By conveyance by the screw feeder within, the device allows for homogenization of the wood pulp. The constant friction caused by the conveyance creates desirable and continuous comminution.

In US 3,741,863, a process for providing cellulosic fibres and fibre bundles from sources of waste material, such as municipal waste is disclosed. The process is somewhat related to the one in US 6,648,251, but requires sterilization and inert conditions. Further, the waste material is abraded at high temperature, e.g. about 480°F (250°C).

In WO 2020/188606 a continuous-flow steam explosion reactor for pretreatment, including sterilization, of organic material, typically organic waste, for further processing to value-added products is disclosed. The reactor comprises a loading section, a high-pressure (i.e. 10 to 30 bar) retention section with an adjustable-speed conveyor, a pressure relief section and a discharge section. The reactor comprises means for providing steam into at least said high-pressure retention section and means for providing pressurized gas (e.g. air) to further boost pressure. The pressure relief section is configured to transfer liquid material from the high-pressure retention section to a discharge section while retaining high pressure in the high-pressure retention section. The pressure relief section comprises at least one rotary dosing valve and at least one rotary discharge valve. The rotary dosing valve is dimensioned and configured to transfer a suitable dose of a liquid substrate to the rotary discharge valve, and the pressure relief section comprises pressure adjustment for maintaining the high pressure (i.e. 10 to 30 bar) in the high-pressure retention section. Prior to introduction to the high-pressure retention section, incoming organic material is fed through a pretreatment section that comprises a wetting and mixing section, where water is be added to the organic material, to obtain desired solid to liquid ratio. Further, the organic material is heated (180 to 250°C) in the high-pressure retention section.

In WO 2021/112749 a process for recycling lignocellulosic fibres from a fibreboard comprising compressed lignocellulosic fibres bonded together by a binding agent is disclosed. The process comprises steaming essentially dry fibreboard pieces at slight over pressure, typically 1.1 to 2 bar absolute pressure, and elevated temperature, typically 103°C to less than 120°C, to provide portions comprising released lignocellulosic fibres. In the process, the dry fibreboard pieces are not wetted before being steamed. Further, the process is operated such that the moisture content in the portions comprising released lignocellulosic fibres is low; typically, 15 to 30% based on the dry weight of the portions. An improved apparatus for performing such a process would be desired.

Fibreboards, especially medium-density fibreboards (MDF), are used a lot in the furniture industry. They have a smoother and more homogenous interior than particleboard. In addition, they are stronger. Types of fibreboard in the art include medium-density fibreboard (MDF), and high-density fibreboard (HDF). For pieces of furniture that will be visible, a veneer of wood is often glued onto fibreboard to give it the appearance of conventional wood. Fibreboards are produced from fresh wood. Recycling of fibreboards and especially HDF to produce new fibreboards is known to be difficult and costly.

There is however a growing interest in sustainability throughout the world. In the furniture industry there is thus a need for improved devices for recycling of fibreboards to reduce the use of fresh wood. Especially, it would be of interest to be able to recycle fibreboards in furniture in a more cost efficient way.

### Summary

Accordingly, there is according to a first aspect of the invention provided an apparatus configured to recycle lignocellulosic fibres from a fiberboard as defined in claim 1.

This apparatus is advantageous in that it provides an efficient means for recycling of fibreboard particles. Hence, such fibreboard particles may be reused for other purposes. The apparatus is easy to operate and is not cumbersome to manoeuvre. Hence, the apparatus disclosed herein may recycle fibreboard particles from furniture parts. It is especially suitable for the process disclosed in WO 2021/112749.

The housing and the transport device therein may be longitudinal and extend along a centre axis A, and the inlet may be facing upwards from the housing and the outlet may be facing downwards from the housing. This is advantageous since the apparatus may take advantage of gravity when both fibreboard particles are introduced into the housing and when recycled fibreboard portions exists the apparatus through the outlet pressure lock.

In one embodiment, the steam generator is in communication with the housing through pipe connections at more than one position of the perimeter of the housing. Preferably, the steam generator is in communication with the housing through pipe connections at between 2 and 10 positions of the perimeter, more preferably between 4 and 8 positions of the perimeter, and most preferred between 5 to 7 of the perimeter. This facilitates the supply and regulation of the pressure inside the housing.

In another embodiment, each pipe connection is in communication with the housing through a plurality of pipe inlet valves. This is advantageous since it facilitates the supply and regulation of the pressure within the housing even further.

In yet another embodiment, the transport device is a transport screw, a conveyor belt or a chain conveyor.

The apparatus may further comprise a driving unit configured to operate the transport device. Preferably, the driving unit being is an engine.

The pressure in the housing is between 1.1 and 7 bar absolute pressure, and the temperature is between 103°C and 165°C, or a pressure of 1.2 to 6 bar absolute pressure and a temperature of 105°C to 159°C, or a pressure of 1.5 to 3 bar absolute pressure and at a temperature of 111°C to 134°C, during use of the apparatus. These parameters are advantageous since they contribute to an efficient hydrolysis of the fibreboard particles inside the housing. As can be seen, the apparatus is designed to operate at moderate over pressure, e.g. 1.1 to 7 bar absolute pressure, and temperature.

In another embodiment, the inlet pressure lock comprises a first valve gate, a second valve gate being the inlet, an intermediate chamber there between, and a pressure regulating means. In line with the invention, the outlet pressure lock comprises a first valve gate being the outlet, a second valve gate, and an intermediate chamber there between. The pressure regulating means is arranged for adjusting pressure within the intermediate chamber of the inlet pressure lock. This is advantageous since the arrangement of the inlet pressure lock provides fibreboard particles to the housing at an elevated over pressure equal or higher than the pressure inside the housing. Further, the arrangement of the outlet pressure lock facilitates the steam explosion, i.e. the sudden expansion of super-atmospheric pressure.

In one embodiment, the pressure regulating means is in communication with the intermediate chamber regulates the pressure therein with steam or compressed air.

This is beneficial since both steam and/or compressed air may be used to control the pressure inside the intermediate chamber.

The valve gates may be selected from the group consisting of a knife gate valve (sliding gate), a butterfly gates valve, preferably having a deflector cone, or a calotte valve. Alternatively, the valve gates may be rotary valves or a ball valves. Given the moderate pressure, there is no need for more complex cascades of valves, such as combinations of rotary valves.

Further, the housing and the transport device are arranged pivotally, the inlet end being arranged lower than the outlet end. The housing and the transport device are pivotally arranged, with the inlet end being arranged closer to a ground surface GS than the outlet end. This is advantageous in that the steam explosion taking place at the outlet pressure gate may take advantage of the gravity since the outlet end is elevated from the ground surface GS. Moreover, the pivotal arrangement facilitates the disintegration of the fibres due to shear forces exerted on the fibres by the transport device.

In an embodiment not falling within the scope of the claimed invention, the housing and the transport device may be horizontally arranged.

In one embodiment, the apparatus further comprises a dryer arranged in communication with the outlet pressure lock.

In another embodiment, the dryer has a cylindrical shape and comprises an inlet end in communication with the outlet pressure lock, an outlet end, and an inner perforated drum optionally arranged inside an outer isolating housing. The inner perforated drum is arranged in between the inlet end and the outlet end. Further, the dryer comprises a transport tool arranged within the perforated drum for transporting recycled lignocellulosic fibres received at the inlet end from the outlet pressure lock through the inner perforated drum to the outlet end. Optionally, the dryer comprises at least one air nozzle configured to introduce air into the perforated drum, whereby a flow of air is created within the dryer. Preferably, the transport tool is a rotatable transport screw.

In yet another embodiment, the dryer further comprises a target fraction outlet and an oversize outlet in a separation zone at the outlet end.

The fibreboard may be a Low Density Fibreboard (LDF), a Medium Density Fibreboard (MDF) or a High Density Fibreboard (HDF).

In another embodiment, the moisture content of the fibreboard pieces does not exceed 25% based on the dry weight of the fibreboard pieces. Preferably, the moisture content of the fibreboard pieces to be steamed does not exceed 20%, such as 15%, based on the dry weight of the fibreboard pieces. This is beneficial since if the moisture content of the fibreboard pieces does not exceed 25% based on the dry weight of the fibreboard pieces, the drying the recycled fibreboard materials is facilitated. Another advantage of a moisture content of 25% or lower is that waste water emanating from the apparatus 100 is avoided. A low moisture content implies that a dryer arranged in communication with the outlet pressure lock efficiently may dry ejected recycled lignocellulosic fibres, as the moisture content in the ejected recycled lignocellulosic fibres also is low.

In yet another embodiment, the apparatus further comprises a compressed air generator in communication with the housing configured to introduce compression air into the housing. This is advantageous since the apparatus may then combine the use of compressed air and stem to regulate the pressure inside the housing.

### Brief description of the drawings

These and other aspects, features and advantages of which the invention is capable of will be apparent and elucidated from the following description of embodiments of the present invention, reference being made to the accompanying drawings, in which:
**Fig. 1A** shows an apparatus for recycling of lignocellulosic fibres from a fibreboard comprising a transport device and pressure locks;
**Fig. 1B** shows an apparatus for recycling of lignocellulosic fibres from a fibreboard comprising a transport device and pressure locks according to another embodiment;
**Fig. 2** shows an inlet pressure lock comprised in the apparatus disclosed herein;
**Fig. 3** shows an outlet pressure lock comprised in the apparatus disclosed herein; and
**Fig. 4** shows a dryer optionally comprised in the apparatus disclosed herein.

### Detailed description

The following description focuses on an embodiment of the present invention applicable to an apparatus for recycling of lignocellulosic fibres from a fibreboard 10 comprising compressed lignocellulosic fibres bonded together by a binding agent. However, it will be appreciated that the invention is not limited to the specific exemplary embodiment described, since it is limited only by the appended claims.

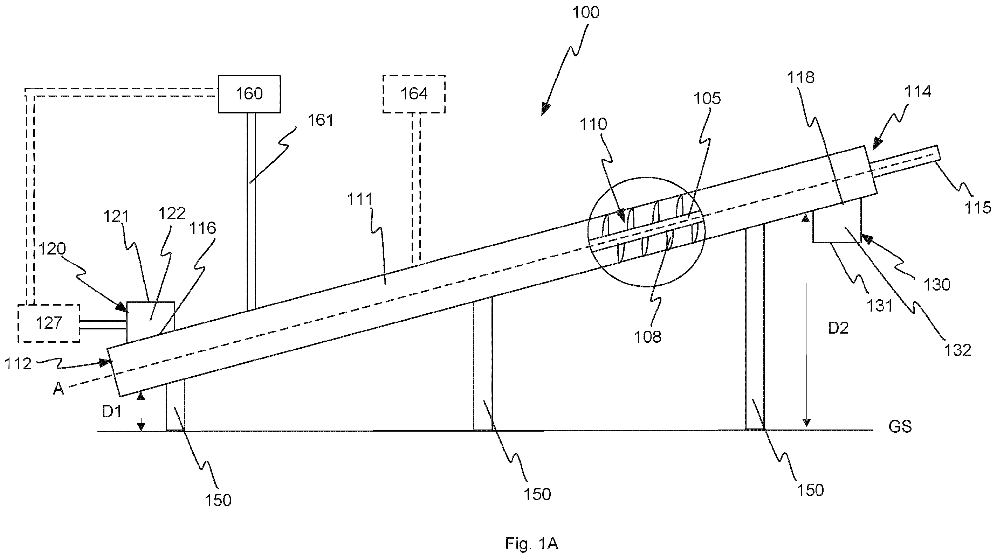

Fig. 1A shows an apparatus 100 for recycling of lignocellulosic fibres from a fibreboard 10 comprising compressed lignocellulosic fibres bonded together by a binding agent. For instance, the fibreboard 10 may be a low density fibreboard (LDF), a high density fibreboard (HDF) or a medium density fibreboard (MDF). As indicated by the dashed line in Fig. 1A, the apparatus 100 extends along a longitudinal centre axis A. Further, the apparatus 100 has an inlet end 112 and an outlet end 114.

The apparatus 100 is provided with a transport device 110 arranged within a closed housing 111, in which fibreboard pieces 11 of the fibreboard 10 will be steamed at super-atmospheric pressure. The fibreboard pieces 11 are formed from crushing the fibreboard 10 into smaller pieces 11. As shown in Fig. 1A, the housing 111 is oblong and typically has a length in the range of 4 to 10 m. Commonly, the fibreboard pieces 11 have a mix of different dimensions, the largest dimension being in the range of 5 to 50 cm. The thickness of fibreboard pieces 11 (i.e. the thickness of the fibreboard 10 crushed) is typically in the range 10 to 50 mm. For instance, the fibreboard pieces 11 may be fairly quadratic and have dimensions of between 5x5 mm and 50x50 mm, preferably the fibreboard pieces 11 have a dimension of about 30x30 mm.

The transport device 110 will convey the fibreboard pieces 11 during the recycling process from an inlet 116 of the housing 111 to an outlet 118 of the housing 111. Hence, the fibreboard pieces 11 are fed to the housing 111 through the inlet 116 and exit the housing 111 through the outlet 118 as steamed portions 12 comprising released lignocellulosic fibres.

Furthermore, the housing 111 is arranged at a distance D1, D2 from a ground surface GS. Three supports 150 are used to hold the housing 111 at a preferred distance D1, D2 from the ground surface GS. In Fig. 1A, the housing 111 is pivotally arranged, which facilitates the disintegration of the fibres due to shear forces exerted on the fibres by the transport device 110. Moreover, the pivotal arrangement where the inlet end 112 is arranged lower than the outlet end 114 contributes to that gravity can be used to facilitate the filling and release of the fibres to and from the housing 111.

When arranged inclined as shown in Fig. 1A, an angle between the housing 111 and the ground surface GS is preferably in the range of 15 to 30 degrees, preferably about 20 degrees. A possible distance D1 is between 20 and 50 cm, preferably about 30 to 40 cm and a possible distance D2 may be between 1.5 and 2.5 meters, preferably about 2 m. However, the housing 111 may also be arranged horizontally.

In Fig. 1A, the transport device 110 is a screw conveyor 110, having a centre shaft 105 and a blade 108 extending therefrom. In Fig. 1A the blade 108 is a continuous screw, also denoted worm, extending from the shaft 105 in a helical manner. However, the transport device 110 may be a conveyor belt or a chain conveyor. If the housing 111 and transport device 110 are pivotally arranged, a vibrating chute may also be used as a transport device 110.

The inlet 116 is part of an inlet pressure lock 120 which will receive fibreboard pieces 11 at atmospheric pressure through a first valve gate 121 and deliver the pieces 11 to the housing 111 via the inlet 116 at a super-atmospheric pressure. Hence, the inlet 116 is also a second valve gate 116 of the inlet pressure lock 120. Between the first 121 and second valve gate 116, there is an intermediate chamber 122 which is connected to and in fluid communication with the steam generator 160. Optionally, the intermediate chamber 122 is coupled to a pressure regulating means 127, operating separately from the steam generator 160.

Further, the outlet 118 is part of an outlet pressure lock 130 configured to receive the steamed portions 12 comprising released lignocellulosic fibres from the housing 111 through the outlet 118, which is also a first valve gate 118 of the outlet pressure lock 130. The outlet pressure lock 130 further comprises a second valve gate 131 and an intermediate chamber 132 there between. The outlet pressure lock 130 will eject recycled lignocellulosic fibres 13 from the apparatus 100.

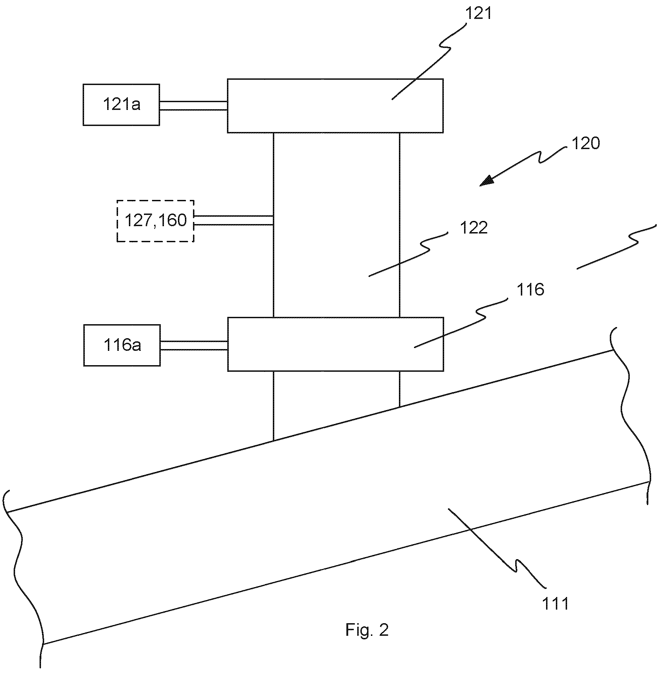

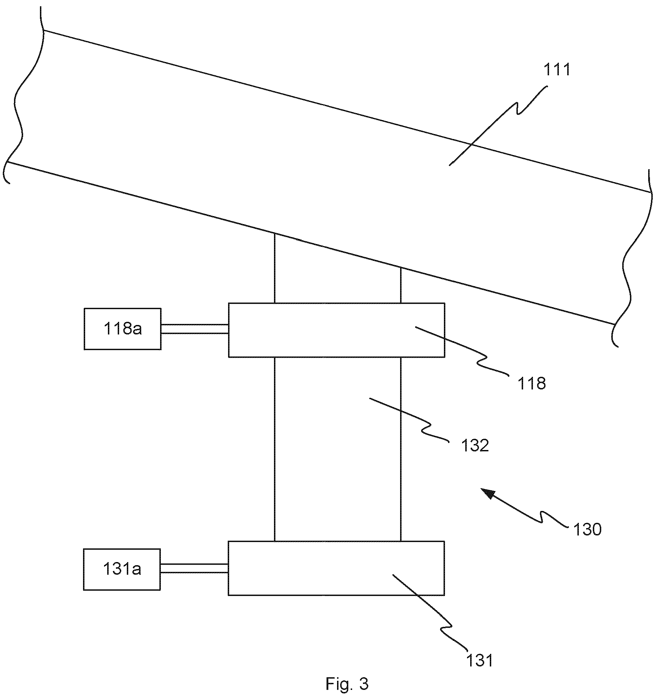

The inlet pressure lock 120 and the outlet pressure lock 130 will be explained more in the following with reference to Figs 2 and 3.

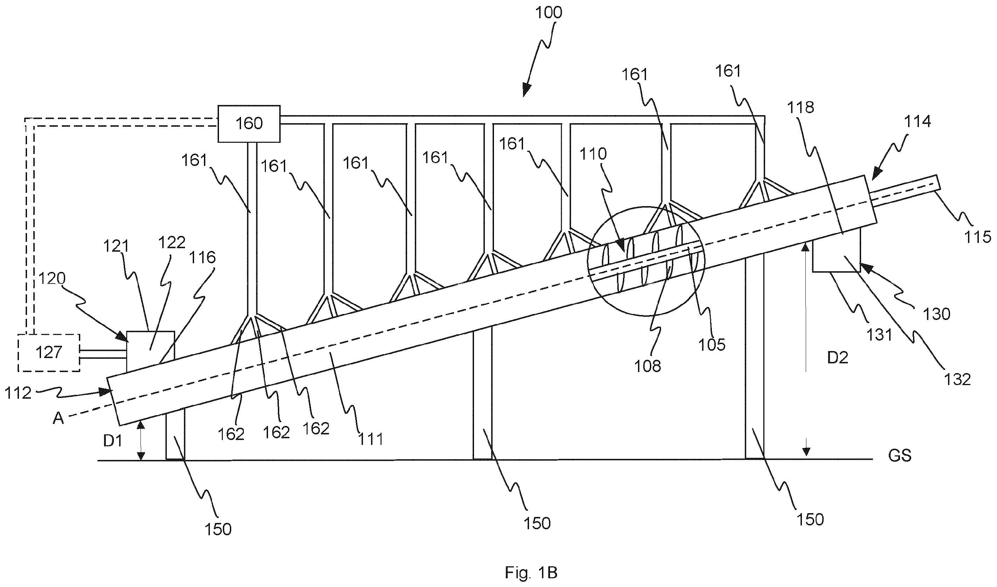

A steam generator 160 is coupled to and is in communication with the housing 111. In Fig. 1A, the steam generator 160 is connected to the housing through one pipe connection 161 at one position. However, the steam generator 160 may be connected to the housing 111 through several pipe connections 161 along the extension and perimeter of the housing 111. Also, each pipe connection 161 along the housing 111 may comprise a plurality of inlet valves 162, as shown in Fig. 1B. In Fig. 1B, there are seven pipe connections 161, each in turn comprising three inlet valves 162. However, there may be for instance five inlet valves 162 per pipe connection 161. In addition to the pipe connections 161 and inlet valves 162 of the apparatus 100 shown in Fig. 1B, the apparatus 100 comprises the same components as the apparatus shown in Fig. 1A.

The steam generator 160 controls the pressure inside the housing 111 and elevates the pressure therein to a super-atmospheric pressure. Hence, the steam generator 160 operates using steam to regulate the pressure inside the housing 111.

Figs 2 and 3 show schematic drawings of the inlet and outlet pressure locks 120, 130, respectively, each comprising the intermediate chamber 122, 132, which separates a first valve gate 116, 118 from a second valve gate 121, 131. The intermediate chamber 122, 132 is arranged vertically between the first valve gate 116, 121 and the second valve gate 118, 131.

The valve gates 121, 116, 118, 131 are selected from the group consisting of a knife gate valve (sliding gate), a butterfly gates valve, preferably having a deflector cone, or a calotte valve. Such gates, especially knife gate valves (sliding gate) and butterfly gates valves, are suitable for gating pieces of lignocellulosic fibres 11 and/or steamed portions 12 comprising released lignocellulosic fibres with low moisture content.

In Fig. 2, a pressure regulating means 127, 160 is coupled to the intermediate chamber 122. The steam generator 160 may act as the pressure regulating means, or a separate pressure regulating means 127 is used. If the intermediate chamber 122 is coupled to the steam generator 160, as indicated by the dashed lines in Figs 1A and 1B connecting the intermediate chamber 122 to said steam generator 160, the steam generator 160 supplies the intermediate chamber 122 with steam, thereby elevating the pressure therein to a pressure corresponding to the overpressure in the housing 111 or to an overpressure exceeding the pressure within said housing 111. Optionally, the pressure regulating means 127 is a separate pressure regulator, either being a steam generator or a compressed air generator.

Each valve gate 116, 118, 121, 131 has a valve switch 116a, 118a, 121a, 131a connected thereto, which controls the opening and closure of the valve gate 116, 118, 121, 131.

The operation of the apparatus 100 will now be explained in more detail with reference to the Figs 1-3.

The pressure locks 120, 130 used in the apparatus 100 each operate sequentially, independently from each other. For instance, during operation of the apparatus 100 the inlet pressure lock 120 may be opened and closed a plurality of times while a batch of previously inserted fibreboard particles 11 are transported towards the outlet pressure lock 130. The apparatus 100 operates in a sequential continuous process with the aid from the pressure locks 120, 130, which are regulated independently from each other.

Hence, during operation of the apparatus 100, the inlet pressure lock 120 shown in Fig. 2 will let fibreboard particles 11 in from above through the first valve gate 121 and subsequently close the first valve gate 121 with the valve gate switch 121a. Then, the pressure regulating means 127, 160 introduces steam or compressed air into the intermediate chamber 122 to achieve the same or higher pressure than the super-atmospheric pressure inside the housing 111 in the intermediate chamber 122.

When the intermediate chamber 122 and the fibreboard particles 11 have been pressurised, the second valve gate 116 (i.e. the inlet 116 to the housing 111) is opened by the valve switch 116a such that the fibreboard particles 11 fall into the housing 111.

Once in the housing 111, the transport device 110 will convey the fibreboard particles 11 through the housing 111 along the axis A. The driving unit 115 connected to the centre axis 105 cause the transport screw 110 to rotate inside the housing 111, such that material is conveyed from the inlet end 112 towards the outlet end 114. During such transportation, the steam generator 160 ensures that the pressure inside the housing 111 is a super-atmospheric pressure by introducing steam and/or compression air into the housing 111 through the pipe connection(s) 161.

When the fibreboard pieces 11 are subjected to the overpressure, the fibreboard pieces 11 are exposed to heat and moisture, which dissolves the adhesive binder and the pieces 11 release the lignocellulosic fibres due to the hydration. Moreover, the binding agent comprised in the pieces 11 are hydrolyzed. This process transforms the fibreboard pieces 11 into portions 12 comprising released lignocellulosic fibres during the transportation within the housing 111 of the apparatus 100. Thus, when the pieces 11 have reached the outlet pressure lock 130, they have been transformed into portions 12 comprising released lignocellulosic fibres.

Optionally, during operation, the housing 111 may be fed with steam in a first half of its length and compressed air in the second half of its length. In such case, the fibres 11 will not absorb the same amount of moisture as if only steam is used, but the moisture available will have a longer period of time to conduct the hydrolysation. A compressed air generator 164 is in such embodiment arranged in fluid communication with the housing 111 in addition to the steam generator 160, as indicated by the dashed lines of the compressed air generator 164 shown in Fig. 1A.

The pressure outlet lock 130 is also operated repeatedly and sequentially, but in a reverse order and in a slightly different way compared to the inlet pressure lock 120. Firstly, the outlet 118, i.e. the first valve gate 118, is opened such that conveyed portions 12 comprising released lignocellulosic fibres fall into the intermediate chamber 132 of the pressure outlet lock 130. Hence, the intermediate chamber 132 is pressurized by the overpressure present in the housing 111 when the first valve gate 118 is opened, i.e. the intermediate chamber 132 is pressurized by the steam injected into the housing 111.

Since the pressure inside the intermediate chamber 132 is an ambient pressure before the opening of the first valve gate 118, the pressure in the intermediate chamber 132 is elevated upon opening of the first valve gate 118. In this way, an overpressure is achieved in the intermediate chamber 132 holding the portions 12 comprising released lignocellulosic fibres. The first valve gate 118 is closed by the valve switch 118a and then, rapidly thereafter, the second valve gate 131 is opened, causing a sudden expansion of the overpressure in the intermediate chamber 132 of the outlet pressure lock 130. Thus, pressure loss in the intermediate chamber 132 is achieved by opening the second valve gate 131. This releases the portions 12 from the pressure outlet lock 130. Preferably, the second valve gate 131 is a butterfly valve. Further, the separate intermediate chamber 132, implies that more material may be a released in each cycle.

This sudden expansion of the overpressure is referred to as a so called steam explosion herein. The steam explosion in turn results in that the steam which had penetrated the fibres in the portions 12 expands considerably and forcefully, whereby single fibres are torn apart and thus separated from each other. In order to provide an efficient steam explosion, the second valve gate 131 is preferably a valve allowing for rapid opening and release of the fibres, such as a knife gate valve (sliding gate) or a butterfly gates valve.

The weakest point in the fibre portions 12 are the hydrolysed binding joints. Therefore, the separation during the steam explosion separates the binder joints while the lignocellulosic fibres of the portions 12 remain intact such that recycled lignocellulosic fibres 13 are obtained. The preservation of the fibres in the recycled fibres 13 is an advantage since reuse of these fibres is facilitated when the recycled fibres 13 are intact and not shortened.

A pressure inside the housing 111 is 1.1 to 7 bar absolute pressure and at a temperature of 103°C to 165°C, or a pressure of 1.2 to 6 bar absolute pressure and a temperature of 105°C to 159°C, or a pressure of 1.5 to 3 bar absolute pressure and at a temperature of 111°C to 134°C, during use of the apparatus 100.

Due to that the operating pressure in the housing 111 can be maintained at a relatively low level, such as between 1.1 and 7 bar absolute pressure (preferably 1.5 to 3 bar absolute pressure), there is no need to pressurize the intermediate chamber 132 with a separate pressurizing source. Hence, the outlet pressure lock 130 has clear advantages compared to other pressure outlets in similar apparatuses and processes.

For instance, the patent application WO 2020/188606A1 discloses a process and reactor for pretreatment of organic waste, which may include garden waste and waste wood. However, the reactor and process of this patent application relies on a pressure-relief section as a pressure lock outlet to achieve a steam explosion. As opposed to the pressure outlet lock of the present invention, the pressure-relief section in WO 2020/188606A1 is pressurized by a separate steam and/or gas injection to avoid a pressure drop in a high-pressure retention section where the organic material is subjected to overpressure. The high-pressure retention section operates at a much higher overpressure (i.e. 10 to 30 bar) than the housing 111 of the present invention, and thus require that the pressure-relief section is pressurized before it is opened towards the high-pressure retention section to avoid a pressure drop therein. Further, the pressure-relief section is adapted to gate liquid material.

Valve gates selected from the group consisting of a knife gate valve (sliding gate), a butterfly gates valve, preferably having a deflector cone, or a calotte valve, are suitable for operating at moderate pressure. While they efficiently gate large portions of released fibres in each cycle, they are however not suitable for high pressure applications. Further, they are less suitable for gating liquid fibre mass. Combinations of cascades of rotary valves, as disclosed in WO 2020/188606A1, are suitable for gating a liquid fibre mass at high temperature and pressure.

Preferably, the moisture content of the fibreboard pieces 11 does not exceed 25% based on the dry weight of the fibreboard pieces 11, more preferably the moisture content of the fibreboard pieces 11 to be steamed does not exceed 20%, such as 15%, based on the dry weight of the fibreboard pieces 11. The purpose of keeping the moisture content at this level is to reduce the drying efforts after completion of the steam explosion and recycling of the fibreboard materials. Further, also the moisture content of the steamed portions 12 comprising released lignocellulosic fibres is typically low, preferably 15 to 30% based on the dry weight of the portions. Another advantage of a low moisture content of 25% or lower is that waste water emanating from the apparatus 100 is avoided.

These parameters also facilitate the hydrolysation of the binder present in the fibreboard particles 11, and the decompression of the fibres 11, such that recycled fibres 13 having intact fibre lengths are obtained using the apparatus 100.

The moisture content of the fibreboard pieces 11 also differs from the organic waste subjected to overpressure in the reactor disclosed in WO 2020/188606A1, which require a wetting and mixing section to wet and process the waste material to be treated in the reactor. Since the apparatus 100 of the present invention is configured to treat fibreboard pieces 11 for recycling, rather than organic waste material comprising solid waste wood, such a wetting and mixing section is can be dispensed with. In addition, as described above, the process for treating organic waste material disclosed in WO 2020/188606A1 requires a very high operating pressure and that the pressure-relief section (being the outlet section) is pressurized by a separate pressurizing source during each pressure relief cycle.

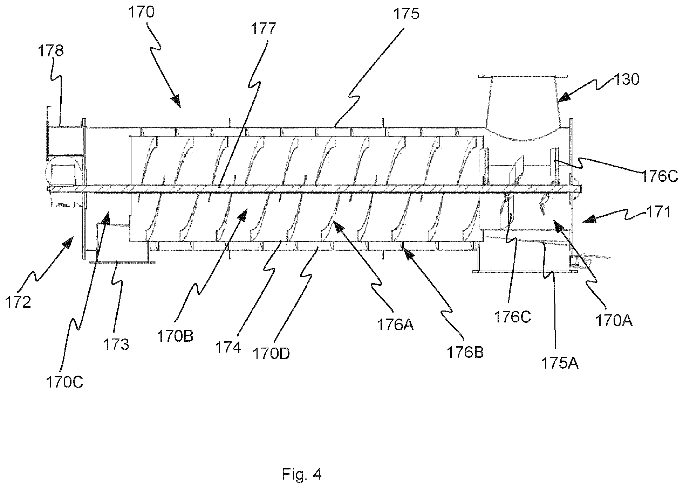

With reference to Fig. 4, the apparatus 100 (not shown) optionally further comprises a dryer 170 arranged in communication with the outlet pressure lock 130 at an inlet end 171. The dryer 170 facilitates the process of adjusting required material and moisture conditions of the recycled fibres 13 and may eliminate and separate contaminations from the recycled fibres 13. Hence, the dryer 170 receives the recycled fibres 13, which have been subjected to the steam explosion in the outlet pressure lock 130.

The arrangement of the dryer 170 together with the outlet pressure lock 130 is mainly associated with processing a quite dry material, as the steamed portions 12 comprising released lignocellulosic fibres (their moisture content preferably being 15 to 30% based on the dry weight of the portions). As described above, the moisture content of the fibreboard pieces 11 does not exceed 25% based on the dry weight of the fibreboard pieces 11 and the moisture content of the steamed portions 12 comprising released lignocellulosic fibres is typically 15 to 30% based on the dry weight of the portions. Several other reactors and processes treating organic material, such as the reactor disclosed in WO 2020/188606A1, relies on wetting of the material to be processed, rather than processing substantially dry material as conducted by the apparatus 100 herein.

The dryer 170 preferably has a cylindrical shape arranged in a substantially horizontal direction and comprises the inlet end 171, an outlet end 172, and an inner perforated drum 174 arranged inside an outer isolating housing 175. It is arranged for drying a material already being quite dry, as the steamed portions 12 comprising released lignocellulosic fibres.

The inlet end 171 to which the outlet pressure lock 130 is connected forms an expansion zone 170A of the dryer 170. The expansion zone 170A is equipped with two sets of rotating baffles 176C inside an expansion zone housing 175A for feeding recycled fibres 13, received in the expansion zone 170A, into the inner perforated drum 174.

After the expansion zone 170A there is a drying zone 170B, in which further moisture may evaporate from the hot recycled fibres 13 through the perforations of the perforated drum 174. By providing the perforated drum 174 inside the outer isolating housing 175, dust and recycled fibres 13 which have been shredded or fined into a particle size sufficiently small to penetrate through the perforations of the drum 174 will exit the drum 174 and enter the space between 170D the housing 175 and the drum 174. By having an outer isolating housing 175, the residual heat of the hot recycled fibres 13 may serve to evaporate water, lowering the already low moisture content of the recycled fibres 13 and not be lost to the surrounding.

Preferably, a separation zone 170C is arranged at the outlet end 172 of the dryer 170 in which dried recycled fibres 13 which have remained in the drum 174 until they reach the outlet end 172 exit the dryer 170 through an outlet 173.

Further, a first transport tool 176A, such as a first rotating feed screw, is arranged within the perforated drum 174. The first feed screw 176A has an angled orientation, e.g. a right-angled orientation. A second transport tool 176B, being a second rotating feed screw, is arranged between the outside of the drum 174 and the inner side of the housing 175. The second feed screw 176B has an angled orientation opposite to the one of the first feed screw 176A, e.g. a left-angled orientation.

The dryer 170 further comprises a centre rotational axis 177. The first feed screw 176A, the second feed screw 176B, and the rotating baffles 176C are attached to the centre rotational axis 177. Rotation of the centre rotational axis 177 causes the first feed screw 176A, the second feed screw 176B, and the rotating baffles 176C to rotate. Since the first and second feed screws 176A, 176B have oppositely arranged angled orientation, the rotation of the centre axis 177 will cause the first feed screw 176A to transport the recycled fibres 13 from the inlet end 171 towards the outlet end 172, whereas the second feed screw 176B will in turn transport recycled fibres 13, which have exited the drum 174 to enter the space between 170D, in opposite direction back towards the inlet end 171. In addition, the baffles 176C will rotate and thereby push recycled fibre material 13 entering the dryer 170 from the outlet gate 130 into the drum 174.

Apart from transporting the recycled fibres 13 from the inlet end 171 to the outlet end 172, the first transport tool 176A may also serve to further separate the recycled fibres 13 from each other. Still the transport is gentle to avoid reducing the fibre length. Optionally, an angle of the centre rotation axis 177 may be adjusted. Further optionally, the first transport tool 176A may be a pneumatic transport tool or a linear mechanical transport tool.

During operation, the first feed screw 176A feeds the recycled fibres 13 from the inlet end 171 and the expansion zone 170A through the drying zone 170B of the perforated drum 174 towards the outlet end 172. A plurality of air nozzles (not shown) introduce hot or cold air into the perforated drum 174 such that the recycled fibres 13 are further dried in the drying zone 170B. The drying process create conditions which ease and support water evaporation and which decrease the risk of formation of lumps and/or fibre balls. The pressure inside the dryer 170 is preferably an ambient pressure, to provide a gentle transportation of the recycled fibres 13.

Once the dried recycled fibres 13 reach the separation zone 170C at the outlet end 172, the recycled fibres 13 will pass through the outlet 173 or, if lumps or fibre balls have been formed which have a larger particle size than the target fraction, these will may exit the dryer through an oversize outlet (not shown). The separation zone 170C further comprises an active or passive steam/hot moisturised air outlet 178. Also the inlet end may comprise a passive/active steam outlet. Further, a disintegrator, such as a fine opener (not shown in Fig. 4), may be arranged at the outlet end 172 of the dryer 170, upstream, or downstream, of the outlet 173, to further separate the recycled fibres 13 from each other. Before being used in producing fibreboards, the recycled fibres 13 may be subject to size fractioning, e.g. in a classifier.

Without further elaboration, it is believed that one skilled in the art may, using the preceding description, utilize the present invention to its fullest extent. The preceding preferred specific embodiments are, therefore, to be construed as merely illustrative and not limitative of the disclosure in any way whatsoever.

Although the present invention has been described above with reference to specific embodiments, it is not intended to be limited to the specific form set forth herein. Rather, the invention is limited only by the accompanying claims.

## Claims

1. An apparatus configured to recycle lignocellulosic fibres from a fibreboard (10) comprising compressed lignocellulosic fibres bonded together by a binding agent, the apparatus (100) comprising:
a transport device (110) arranged within a closed housing (111), wherein the housing (111) and the transport device (110) are arranged pivotally, the inlet end (112) being arranged lower than the outlet end (114), and wherein the housing (111) is arranged for steaming pieces (11) of the fibreboard (10) at super-atmospheric pressure to decompress and release the lignocellulosic fibres by hydrating them, as well as hydrolysing the binding agent, and the transport device (110) is arranged for transporting the fibreboard pieces (11), upon being steamed, from an inlet (116) of the housing (111), at which the fibreboard pieces (11) are fed to the housing (111), to an outlet (118) of the housing (111), at which steamed portions (12) comprising released lignocellulosic fibres exit the housing (111);
a steam generator (160) in communication with the housing (111), whereby the fibreboard pieces (11) are configured to be steamed at super-atmospheric pressure in the housing (111) to provide the steamed portions (12) comprising released lignocellulosic fibres, wherein the pressure in the housing (111) is between 1.1 and 7 bar absolute pressure, and the temperature is between 103°C and 165°C, during use of the apparatus (100);
an inlet pressure lock (120) configured to receive the fibreboard pieces (11) at atmospheric pressure and to deliver them to the housing (111), via the inlet (116), at super-atmospheric pressure; and
an outlet pressure lock (130) configured to receive the steamed portions (12) comprising released lignocellulosic fibres via the outlet (118) and ejecting recycled lignocellulosic fibres (13) during a sudden expansion of super-atmospheric pressure, wherein the outlet pressure lock (130) comprises a first valve gate (118) being the outlet (118), a second valve gate (131), and an intermediate chamber (132) there between, said intermediate chamber (132) separating the first valve gate (118) from the second valve gate (131) .

2. The apparatus according to claim 1, wherein the housing (111) and the transport device (110) therein are longitudinal and extend along a centre axis (A), and wherein the inlet (116) is facing upwards from the housing (111) and the outlet (118) is facing downwards from the housing (111).

3. The apparatus according to claim 1 or 2, wherein the steam generator (160) is in communication with the housing (111) through pipe connections (161) at more than one position of the perimeter of the housing (111), preferably at between 2 and 10 positions of said perimeter, more preferably between 4 and 8 positions of said perimeter, and most preferred between 5 to 7 of said perimeter.

4. The apparatus according to claim 3, wherein each pipe connection (161) is in communication with the housing (111) through a plurality of pipe inlet valves (162).

5. The apparatus according to any one of the preceding claims, wherein the transport device (110) is a transport screw, a conveyor belt or a chain conveyor.

6. The apparatus according to any one of the preceding claims, wherein the apparatus (100) further comprises a driving unit (115) configured to operate the transport device (110), preferably the driving unit being an engine.

7. The apparatus according to any one of the preceding claims, wherein the pressure in the housing (111) is between 1.2 and 6 bar absolute pressure, and the temperature is between 105°C and 159°C during use of the apparatus (100), such as a pressure of 1.5 to 3 bar absolute pressure and a temperature of 111°C to 134°C, during use of the apparatus (100).

8. The apparatus according to any one of the preceding claims, wherein the inlet pressure lock (120) comprises a first valve gate (121), a second valve gate being the inlet (116), an intermediate chamber (122) there between, and a pressure regulating means (127), , and wherein the pressure regulating means (127) is arranged for adjusting pressure within the intermediate chamber (122) of the inlet pressure lock (120), optionally wherein pressure regulating means (127) in communication with the intermediate chamber (122) regulates the pressure therein with steam or compressed air.

9. The apparatus according to any one of the preceding claims, wherein the valve gates (121, 116, 118, 131) are selected from the group consisting of a knife gate valve (sliding gate), a butterfly gates valve, preferably having a deflector cone, or a calotte valve.

10. The apparatus according to any one of the preceding claims, wherein the apparatus (100) further comprises a dryer (170) arranged in communication with the outlet pressure lock (130).

11. The apparatus according to claim 10, wherein the dryer (170) has a cylindrical shape and comprises an inlet end (171) in communication with the outlet pressure lock (130), an outlet end (172), an inner perforated drum (174) optionally arranged inside an outer isolating housing (175), the inner perforated drum (174) being arranged in between the inlet end (171) and the outlet end (172), a transport tool (176) arranged within the perforated drum (174) for transporting recycled lignocellulosic fibres (13) received at the inlet end (171) from the outlet pressure lock (130) through the inner perforated drum (174) to the outlet end (172), and optionally at least one air nozzle (178) configured to introduce air into the perforated drum (174), whereby creating a flow of air within the dryer (170), preferably said transport tool (176) being a rotatable transport screw.

12. The apparatus according to any one of the preceding claims, wherein the fibreboard (10) is a Low Density Fibreboard (LDF), a Medium Density Fibreboard (MDF) or a High Density Fibreboard (HDF).

13. The apparatus according to any one of the preceding claims, wherein the moisture content of the fibreboard pieces (11) does not exceed 25% based on the dry weight of the fibreboard pieces (11); preferably the moisture content of the fibreboard pieces (11) to be steamed does not exceed 20%, such as 15%, based on the dry weight 20 of the fibreboard pieces (11).

14. The apparatus according to any one of the preceding claims, wherein the moisture content of the steamed portions (12) comprising released lignocellulosic fibres is 15 to 30% based on the dry weight of the portions.

15. The apparatus according to any one of the preceding claims, wherein the apparatus further comprises a compressed air generator (164) in communication with the housing (111) configured to introduce compression air into the housing (111).

## Patentansprüche

1. Vorrichtung, die ausgebildet ist, lignocellulosehaltige Fasern aus einer Faserplatte (10) zu recyceln, wobei die Faserplatte (10) komprimierte lignocellulosehaltige Fasern aufweist, die durch ein Bindemittel miteinander verbunden sind, wobei die Vorrichtung (100) Folgendes aufweist:
eine Transportvorrichtung (110), die in einem geschlossenen Gehäuse (111) angeordnet ist, wobei das Gehäuse (111) und die Transportvorrichtung (110) schwenkbar angeordnet sind, wobei das Einlassende (112) tiefer angeordnet ist als das Auslassende (114), und wobei das Gehäuse (111) dazu ausgebildet ist, Stücke (11) der Faserplatte (10) bei überatmosphärischem Druck zu bedampfen, um die lignocellulosehaltigen Fasern durch Hydratisierung zu dekomprimieren und freizusetzen sowie das Bindemittel zu hydrolysieren, und wobei die Transportvorrichtung (110) dazu ausgebildet ist, die Faserplattenstücke (11) bei der Bedampfung von einem Einlass (116) des Gehäuses (111), an dem die Faserplattenstücke (11) dem Gehäuse (111) zugeführt werden, zu einem Auslass (118) des Gehäuses (111) zu transportieren, an dem bedampfte Portionen (12), die freigesetzte lignocellulosehaltige Fasern aufweisen, das Gehäuse (111) verlassen;
einen Dampferzeuger (160), der mit dem Gehäuse (111) in Verbindung steht, wobei die Faserplattenstücke (11) dazu ausgebildet sind, bei überatmosphärischem Druck im Gehäuse (111) bedampft zu werden, um bedampfte Portionen (12) bereitzustellen, die freigesetzte lignocellulosehaltige Fasern aufweisen, wobei der Druck im Gehäuse (111) zwischen 1,1 und 7 bar absolut liegt und die Temperatur zwischen 103 °C und 165 °C beträgt, während der Benutzung der Vorrichtung (100);
eine Einlassdruckschleuse (120), die dazu ausgebildet ist, die Faserplattenstücke (11) bei atmosphärischem Druck aufzunehmen und sie über den Einlass (116) zum Gehäuse (111) bei überatmosphärischem Druck zu fördern; und
eine Auslassdruckschleuse (130), die dazu ausgebildet ist, die bedampften Portionen (12), die freigesetzte lignocellulosehaltige Fasern aufweisen, über den Auslass (118) aufzunehmen und recycelte lignocellulosehaltige Fasern (13) während einer plötzlichen Expansion von überatmosphärischem Druck auszugeben,
wobei die Auslassdruckschleuse (130) einen ersten Ventilschieber (118) aufweist, der den Auslass (118) bildet, einen zweiten Ventilschieber (131) und eine dazwischen angeordnete Zwischenkammer (132), wobei die Zwischenkammer (132) den ersten Ventilschieber (118) von dem zweiten Ventilschieber (131) trennt.

2. Vorrichtung nach Anspruch 1, wobei das Gehäuse (111) und die darin angeordnete Transportvorrichtung (110) länglich ausgebildet sind und sich entlang einer Mittelachse (A) erstrecken, und wobei der Einlass (116) vom Gehäuse (111) aufwärts weist und der Auslass (118) vom Gehäuse (111) nach unten weist.

3. Vorrichtung nach einem der Ansprüche 1 oder 2, wobei der Dampferzeuger (160) über Rohrverbindungen (161) an mehr als einer Position am Umfang des Gehäuses (111) mit dem Gehäuse (111) in Verbindung steht, bevorzugt an zwischen 2 und 10 Positionen des Umfangs, mehr bevorzugt zwischen 4 und 8 Positionen des Umfangs und am meisten bevorzugt zwischen 5 und 7 Positionen des Umfangs.

4. Vorrichtung nach Anspruch 3, wobei jede Rohrverbindung (161) über eine Vielzahl von Rohreinlassventilen (162) mit dem Gehäuse (111) in Verbindung steht.

5. Vorrichtung nach einem der vorhergehenden Ansprüche, wobei die Transportvorrichtung (110) eine Transportschnecke, ein Förderband oder ein Kettenförderer ist.

6. Vorrichtung nach einem der vorhergehenden Ansprüche, wobei die Vorrichtung (100) ferner eine Antriebseinheit (115) aufweist, die dazu ausgebildet ist, die Transportvorrichtung (110) zu betreiben, wobei die Antriebseinheit vorzugsweise ein Motor ist.

7. Vorrichtung nach einem der vorhergehenden Ansprüche, wobei der Druck im Gehäuse (111) zwischen 1,2 und 6 bar absolut liegt und die Temperatur zwischen 105 °C und 159 °C beträgt, während der Benutzung der Vorrichtung (100), beispielsweise ein Druck von 1,5 bis 3 bar absolut und eine Temperatur von 111 °C bis 134 °C, während der Benutzung der Vorrichtung (100).

8. Vorrichtung nach einem der vorhergehenden Ansprüche, wobei die Einlassdruckschleuse (120) einen ersten Ventilschieber (121), einen zweiten Ventilschieber, der den Einlass (116) bildet, eine dazwischen angeordnete Zwischenkammer (122) und ein Druckregelmittel (127) aufweist, wobei das Druckregelmittel (127) dazu ausgebildet ist, den Druck in der Zwischenkammer (122) der Einlassdruckschleuse (120) zu regulieren, optional, wobei das Druckregelmittel (127) mit der Zwischenkammer (122) in Verbindung steht und den Druck darin mit Dampf oder komprimierter Luft reguliert.

9. Vorrichtung nach einem der vorhergehenden Ansprüche, wobei die Ventilschieber (121, 116, 118, 131) aus der Gruppe ausgewählt sind, bestehend aus einem Messerschieberventil (Schieberventil), einem Absperrklappenventil, vorzugsweise mit einem Ablenkkegel, oder einem Kalottenventil.

10. Vorrichtung nach einem der vorhergehenden Ansprüche, wobei die Vorrichtung (100) ferner einen Trockner (170) aufweist, der mit der Auslassdruckschleuse (130) in Verbindung steht.

11. Vorrichtung nach Anspruch 10, wobei der Trockner (170) eine zylindrische Form hat und Folgendes aufweist: ein Einlassende (171), das mit der Auslassdruckschleuse (130) in Verbindung steht, ein Auslassende (172), eine innere perforierte Trommel (174), die optional innerhalb eines äußeren isolierenden Gehäuses (175) angeordnet ist, wobei die innere perforierte Trommel (174) zwischen dem Einlassende (171) und dem Auslassende (172) angeordnet ist, ein Transportelement (176), das innerhalb der perforierten Trommel (174) angeordnet ist, zum Transport von recycelten lignocellulosehaltigen Fasern (13), die am Einlassende (171) von der Auslassdruckschleuse (130) aufgenommen werden, durch die innere perforierte Trommel (174) zum Auslassende (172), und optional mindestens eine Luftdüse (178), die dazu ausgebildet ist, Luft in die perforierte Trommel (174) einzubringen, wodurch ein Luftstrom innerhalb des Trockners (170) erzeugt wird, wobei das Transportelement (176) vorzugsweise eine drehbare Transportschnecke ist.

12. Vorrichtung nach einem der vorhergehenden Ansprüche, wobei die Faserplatte (10) eine Niedrigdichte-Faserplatte (LDF), eine Mitteldichte-Faserplatte (MDF) oder eine Hochdichte-Faserplatte (HDF) ist.

13. Vorrichtung nach einem der vorhergehenden Ansprüche, wobei der Feuchtigkeitsgehalt der Faserplattenstücke (11), bezogen auf das Trockengewicht der Faserplattenstücke (11), 25 % nicht überschreitet; vorzugsweise überschreitet der Feuchtigkeitsgehalt der zu bedampfenden Faserplattenstücke (11), bezogen auf das Trockengewicht der Faserplattenstücke (11), 20 %, beispielsweise 15 %, nicht.

14. Vorrichtung nach einem der vorhergehenden Ansprüche, wobei der Feuchtigkeitsgehalt der bedampften Portionen (12), die freigesetzte lignocellulosehaltige Fasern aufweisen, 15 bis 30 % bezogen auf das Trockengewicht der Portionen beträgt.

15. Vorrichtung nach einem der vorhergehenden Ansprüche, wobei die Vorrichtung ferner einen Drucklufterzeuger (164) aufweist, der mit dem Gehäuse (111) in Verbindung steht und dazu ausgebildet ist, Druckluft in das Gehäuse (111) einzubringen.

## Revendications

1. Appareil configuré pour recycler les fibres lignocellulosiques d'un panneau de fibres (10) comprenant des fibres lignocellulosiques comprimées et liées ensemble par un agent de liaison, l'appareil (100) comprenant :
un dispositif de transport (110) agencé dans un boîtier fermé (111), dans lequel le boîtier (111) et le dispositif de transport (110) sont agencés de manière pivotante, l'extrémité d'entrée (112) étant agencée plus bas que l'extrémité de sortie (114), et dans lequel le boîtier (111) est agencé pour traiter à la vapeur des éléments (11) de panneau de fibres (10) à une pression super-atmosphérique pour décompresser et libérer les fibres lignocellulosiques en les hydratant, ainsi que pour hydrolyser l'agent de liaison, et le dispositif de transport (110) est agencé pour transporter les éléments de panneau de fibres (11), une fois traités à la vapeur, d'une entrée (116) du boîtier (111), par laquelle les éléments de panneau de fibres (11) sont introduits dans le boîtier (111), à une sortie (118) du boîtier (111), par laquelle les parties traitées à la vapeur (12) comprenant les fibres lignocellulosiques libérées sortent du boîtier (111) ;
un générateur de vapeur (160) en communication avec le boîtier (111), moyennant quoi les éléments de panneau de fibres (11) sont configurés pour être traités à la vapeur à une pression super-atmosphérique dans le boîtier (111) afin de fournir les parties traitées à la vapeur (12) comprenant des fibres lignocellulosiques libérées, dans lequel la pression dans le boîtier (111) est comprise entre 1,1 et 7 bar de pression absolue, et la température est comprise entre 103 °C et 165 °C, lors de l'utilisation de l'appareil (100) ;
un verrou par pression d'entrée (120) configuré pour recevoir les éléments de panneau de fibres (11) à la pression atmosphérique et pour les fournir au boîtier (111), via l'entrée (116), à la pression super-atmosphérique ; et
un verrou par pression de sortie (130) configuré pour recevoir les parties traitées à la vapeur (12) comprenant des fibres lignocellulosiques libérées via la sortie (118) et éjecter les fibres lignocellulosiques recyclées (13) lors d'une expansion soudaine de la pression super-atmosphérique, dans lequel le verrou par pression de sortie (130) comprend une première vanne à clapet (118) correspondant à la sortie (118), une seconde vanne à clapet (131) et une chambre intermédiaire (132) entre les deux, ladite chambre intermédiaire (132) séparant la première vanne à clapet (118) de la seconde vanne à clapet (131).

2. Appareil selon la revendication 1, dans lequel le boîtier (111) et le dispositif de transport (110) qu'il contient sont longitudinaux et s'étendent le long d'un axe central (A), et dans lequel l'entrée (116) est orientée vers le haut par rapport au boîtier (111) et la sortie (118) est orientée vers le bas par rapport au boîtier (111).

3. Appareil selon la revendication 1 ou 2, dans lequel le générateur de vapeur (160) est en communication avec le boîtier (111) par des raccords de tuyaux (161) à plus d'une position du périmètre du boîtier (111), de préférence entre 2 et 10 positions dudit périmètre, plus préférentiellement entre 4 et 8 positions dudit périmètre, et le plus préférentiellement entre 5 et 7 positions dudit périmètre.

4. Appareil selon la revendication 3, dans lequel chaque raccord de tuyaux (161) est en communication avec le boîtier (111) par l'intermédiaire d'une pluralité de vannes d'entrée (162) de tuyaux.

5. Appareil selon l'une quelconque des revendications précédentes, dans lequel le dispositif de transport (110) est une vis transporteuse, une bande transporteuse ou un convoyeur à chaîne.

6. Appareil selon l'une quelconque des revendications précédentes, dans lequel l'appareil (100) comprend en outre une unité d'entraînement (115) configurée pour faire fonctionner le dispositif de transport (110), l'unité d'entraînement étant de préférence un moteur.

7. Appareil selon l'une quelconque des revendications précédentes, dans lequel la pression dans le boîtier (111) est comprise entre 1,2 et 6 bar de pression absolue, et la température est comprise entre 105 °C et 159 °C pendant l'utilisation de l'appareil (100), par exemple une pression de 1,5 à 3 bar de pression absolue et une température de 111 °C à 134 °C, pendant l'utilisation de l'appareil (100).

8. Appareil selon l'une quelconque des revendications précédentes, dans lequel le verrou par pression d'entrée (120) comprend une première vanne à clapet (121), une seconde vanne à clapet correspondant à l'entrée (116), une chambre intermédiaire (122) entre les deux, et un moyen de régulation de pression (127), et dans lequel le moyen de régulation de pression (127) est agencé pour ajuster la pression dans la chambre intermédiaire (122) du verrou par pression d'entrée (120), facultativement dans lequel le moyen de régulation de pression (127, en communication avec la chambre intermédiaire (122) régule la pression à l'intérieur de celle-ci au moyen de vapeur ou d'air comprimé.

9. Appareil selon l'une quelconque des revendications précédentes, dans lequel les vannes à clapet (121, 116, 118, 131) sont choisies dans le groupe constitué par une vanne à guillotine (vanne glissante), un robinet-vanne à papillon, de préférence avec un cône déflecteur, ou une vanne à calotte.

10. Appareil selon l'une quelconque des revendications précédentes, dans lequel l'appareil (100) comprend en outre un séchoir (170) agencé en communication avec le verrou par pression de sortie (130).

11. Appareil selon la revendication 10, dans lequel le séchoir (170) a une forme cylindrique et comprend une extrémité d'entrée (171) en communication avec le verrou par pression de sortie (130), une extrémité de sortie (172), un tambour perforé intérieur (174) facultativement agencé à l'intérieur d'un boîtier isolant extérieur (175), le tambour perforé intérieur (174) étant agencé entre l'extrémité d'entrée (171) et l'extrémité de sortie (172), un outil de transport (176) agencé à l'intérieur du tambour perforé (174) pour transporter les fibres lignocellulosiques recyclées (13) reçues à l'extrémité d'entrée (171) depuis le verrou par pression de sortie sous pression (130) à travers le tambour perforé intérieur (174) jusqu'à l'extrémité de sortie (172), et facultativement au moins une buse d'air (178) configurée pour introduire de l'air dans le tambour perforé (174), créant ainsi un flux d'air à l'intérieur du séchoir (170), de préférence ledit outil de transport (176) étant une vis transporteuse rotative.

12. Appareil selon l'une quelconque des revendications précédentes, dans lequel le panneau de fibres (10) est un panneau de fibres de faible densité (LDF), un panneau de fibres de densité moyenne (MDF) ou un panneau de fibres de haute densité (HDF).

13. Appareil selon l'une quelconque des revendications précédentes, dans lequel la teneur en humidité des éléments de panneau de fibres (11) ne dépasse pas 25 % par rapport au poids sec des éléments de panneau de fibres (11) ; de préférence, la teneur en humidité des éléments de panneau de fibres (11) à traiter à la vapeur ne dépasse pas 20 %, par exemple 15 %, par rapport au poids sec des éléments de panneau de fibres (11).

14. Appareil selon l'une quelconque des revendications précédentes, dans lequel la teneur en humidité des parties traitées à la vapeur (12) comprenant des fibres lignocellulosiques libérées est de 15 à 30 % par rapport au poids sec des parties.

15. Appareil selon l'une quelconque des revendications précédentes, lequel l'appareil comprend en outre un générateur d'air comprimé (164) en communication avec le boîtier (111) configuré pour introduire de l'air comprimé dans le boîtier (111).
